# EUROPÄISCHE PATENTSCHRIFT

(11) **EP 2 116 355 B1**
(45) Veröffentlichungstag und Bekanntmachung des Hinweises auf die Patenterteilung: **13.07.2016**
(21) Anmeldenummer: 09003528.8
(22) Anmeldetag: 11.03.2009
(51) Int. Cl.: B29C 65/16, B23K 26/02

(54) **Laservorrichtung mit pendelfähiger Anpressrolle**
Laser device with pendulous press roller
Dispositif laser doté d'un roue de compression pouvant osciller

(30) Priorität: 06.05.2008 DE 202008006180 U
(43) Veröffentlichungstag der Anmeldung: 11.11.2009
(73) Patentinhaber: Leister Technologies AG, 6056 Kägiswil (CH)
(72) Erfinder: Scheidt, Michael, 8623 Wetzikon ZH (CH); Hinz, Oliver, 6072 Sachseln (CH); Vogler, Daniel, 6003 Luzern (CH); Niederberger, Adolf, 6056 Kägiswil (CH)
(74) Vertreter: Klocke, Peter

(56) Entgegenhaltungen:
- CN-A- 102 079 135
- JP-A- S5 746 831
- JP-A- 2004 142 225
- SU-A1- 1 412 987

## Beschreibung

Die Erfindung betrifft eine Laservorrichtung zum Verbinden von Werkstücken aus Kunststoff in Durchstrahltechnik, mit einem Bearbeitungskopf, der Fokussierungseinrichtungen für den Laserstrahl aufweist. Dabei weist die den Werkstücken nächstliegende Fokussierungseinrichtung eine als Rolle ausgebildete, drehbar gelagerte Zylinderlinse auf, die den Laserstrahl längs einer einzigen Achse fokussiert und die Werkstücke in einem Bereich um die Auftreffstelle des Laserstrahls linienförmig zusammenpresst.

Bei der Durchstrahltechnik werden aneinander grenzende Kontaktflächen der zu verbindenden Werkstücke unter Einwirkung eines Laserstrahls aufgeschmolzen und bei der anschließenden Abkühlung unter Druck miteinander verbunden. Diese Methode des Kunststoffschweißens mit einer Laserstrahl ist allgemein bekannt. Bei diesem Schweißverfahren ist es wichtig, dass während des Schweißvorgangs die Werkstücke miteinander verspannt werden, da eine wichtige Voraussetzung für eine gute Schweißverbindung nicht nur die Dosierung der Energie, sondern auch der direkte mechanische Kontakt zwischen den zu verbindenden Flächen ist. Hierzu sind aus der Praxis Laservorrichtungen in einer Vielzahl unterschiedlicher Ausführungsformen bekannt.

Besonders bei dreidimensionalen Schweißkonturen erweist sich das Spannen der Werkstücke mit herkömmlichen Spannmitteln als aufwendig, wenn ein ausreichender Kontaktdruck auf die Werkstücke über die gesamte Schweißkontur gleichzeitig ausgeübt werden soll. Dazu ist es aus dem Stand der Technik bekannt, das Lenken des Laserstrahls auf die zu verbindende Stelle und das mechanische Zusammendrücken der Werkstücke gleichzeitig durch einen robotergelenkten Bearbeitungskopf vorzunehmen.

Die Offenlegungsschrift JP 2004 142 225 A lehrt ein Verfahren zum Verbinden von zwei übereinander liegenden Kunststoffplatten im Laserdurchstrahlschweißverfahren. Die zu verbindenden Kunststoffplatten werden dazu auf einer Wärmeerzeugungsplatte übereinander geschichtet und mittels eines für Laserlicht transparenten topfförmigen Anpresskörper randseitig gegen die Wärmeerzeugungsplatte gepresst. Die beiden Kunststoffplatten sind aus einem Laserlicht nicht absorbierenden Material hergestellt. Zum randseitigen Verschweißen der Kunststoffplatten wird ein Laserstrahl durch den Anpresskörper auf die zu verschweißenden Ränder der Kunststoffplatten gerichtet, der durch die Kunststoffplatten hindurchtritt und die Wärmeerzeugungsplatte erhitzt. Die Wärmeerzeugungsplatte plastifiziert die direkt aufliegende Kunststoffplatte, so dass diese unter der Druckeinwirkung des Anpresskörpers eine stoffschlüssige Verbindung mit der anderen Kunststoffplatte eingeht.

Die Patentschrift EP 1 405 713 B1 offenbart eine Laservorrichtung, bei der das Zusammendrücken der Werkstücke entweder punktuell genau an der Stelle erfolgt, an der der Laserstrahl auftrifft bzw. auch flächig in einem Bereich um die Aufgriffstelle des Strahls oder entlang einer Linie quer zur Relativbewegung des Laserstrahls. Dies bietet die Möglichkeit, die benötigte Spannkraft gleichzeitig mit dem Laserstrahl entlang einer programmierbaren Schweißkontur kontinuierlich, aber stets punktuell, entlang einer Linie oder in einem bestimmten Bereich an die Stelle zu bringen, an der der Schweißprozess gerade stattfindet und die Spannkraft wirklich benötigt wird. Dies ermöglicht ein dreidimensional bewegbarer Bearbeitungskopf, der mit gleichbleibendem Abstand zu den Werkstücken bewegbar ist und die Übertragung einer mechanischen Anpresskraft sowie der Laserenergie übernimmt.

Die relative Bewegung zwischen dem Bearbeitungskopf und den zu verschweißenden Werkstücken läuft ständig unter mechanischer Berührung ab, während die Werkstücke an der Auftreffstelle des Laserstrahls unter anderem vorzugsweise über eine für Infrarotstrahlung transparente Rolle zusammengepresst werden. Die Anpressrolle, beispielsweise aus Glas oder Kunststoff, ist Teil der Fokussierungseinrichtung des Bearbeitungskopfes für den Laserstrahl. Sie hat damit die optischen Eigenschaften einer Zylinderlinse, die den Strahl linienförmig längs einer einzigen Achse auf die Kontaktflächen der Werkstücke fokussiert. Die als Anpressrolle wirkende Zylinderlinse ist an den Bearbeitungskopf drehbar befestigt, um eine unnötige mechanische Reibung zu verhindern. Beim Abfahren der Schweißkontur wird die Zylinderlinse mit einer rollenden Bewegung über die Oberfläche der Werkstücke bewegt, wobei der Laserstrahl als Linie in Vorschubrichtung oder quer zur Vorschubrichtung auf die Werkstücke auftreffen kann.

Die die Werkstücke pressende Zylinderlinse ist bei der bekannten Laservorrichtung an den beiden Stirnflächen zentrisch drehbar gelagert, wobei die Lage der Linse gegenüber dem Bearbeitungskopf unveränderbar ist. Die Mittelachse der Zylinderlinse ist gegenüber der Längsachse des Bearbeitungskopfes und somit auch der optischen Achse der Fokussierungseinrichtungen fest eingestellt und bildet vorzugsweise einen 90 Grad Winkel mit diesen. Damit die Anpresskraft sowie die Laserstrahlung optimal auf die Werkstücke wirken kann, ist es erforderlich, den Bearbeitungskopf mit einer vorgegebenen Geschwindigkeit entlang der Schweißkontur zu führen und dabei stets senkrecht gegenüber der gerade zu verbindenden Stelle auszurichten. Dazu wird die Bewegung des Bearbeitungskopfes von einem Robotersystem präzise gesteuert, der die Bewegungsgeschwindigkeit, den Bewegungsweg und die Ausrichtung des Kopfes gegenüber den Werkstücken gemäß einer programmierten Vorgabe bestimmt. Bei leicht verformten dreidimensionalen Werkstücken bzw. bei kleinen Unebenheiten auf den Werkstücken kann die programmierte Haltung des Bearbeitungskopfes und damit der pressenden Zylinderlinse von der idealen Stellung gegenüber den Werkstücken abweichen, was die Qualität der erzeugten Schweißnaht mindert.

Ausgehend von diesem Stand der Technik liegt der Erfindung die Aufgabe zugrunde eine Möglichkeit vorzuschlagen, mit der immer ein gleichmäßiger Anpressdruck an den Werkstücken gewährleistet ist.

Diese Aufgabe wird erfindungsgemäß durch eine Laservorrichtung mit den Merkmalen des Anspruchs 1 gelöst. Weitere vorteilhafte Ausgestaltungen sind den Unteransprüchen zu entnehmen.

Gemäß der Erfindung weist der Bearbeitungskopf eine Pendelaufhängung für die drehbare Zylinderlinse auf. Dies ermöglicht, dass sich die Zylinderlinse immer genau tangential an die Oberfläche des dem Bearbeitungskopf gegenüberliegenden Werkstückes anliegen kann. Damit wird die von dem Bearbeitungskopf ausgeübte Presskraft stets senkrecht in die Werkstücke eingeleitet, so dass diese an allen Stellen in gleicher Weise definiert zusammengepresst werden.

Ist die Haltung des Bearbeitungskopfes gegenüber den Werkstücken nicht absolut senkrecht, so wird die Zylinderlinse automatisch um ihr Zentrum geschwenkt, sobald sie die Werkstücke berührt. Damit ist die Zylinderlinse in der Lage Ihre Ausrichtung gegenüber dem Bearbeitungskopf selbstständig zu verändern, wobei die Art der Verbindung keine Bewegung der virtuellen Rotationsachse der Zylinderlinse in Bewegungsrichtung des Bearbeitungskopfes sondern nur ein Ausrichten in Richtung der Längsachse des Bearbeitungskopfes zulässt. Die Zylinderlinse kann also nur um eine Achse kippen, die senkrecht zu der Bewegungsrichtung des Bearbeitungskopfes liegt.

Vorteilhafterweise ist die Art der Verbindung so gewählt, dass die Kippachse der Pendelaufhängung durch das Zentrum der Zylinderlinse geht. Damit wird erreicht, dass der Laserstrahl die Zylinderlinse immer, auch wenn die Zylinderlinse kippt, zentrisch passiert, so dass auch die von einer gekippten Linse erzeugte Fokuslinie an den Werkstücken nicht stark verändert ist.

In einer bevorzugten Ausführungsform der Erfindung ist die als Anpressrolle wirkende Zylinderlinse über ein Kreuzgelenk mit dem Bearbeitungskopf verbunden. Dies wird dadurch erreicht, dass ein zentrales Kreuz an zwei gegenüberliegenden Enden mit drehbaren Gelenken an dem Bearbeitungskopf und an der Zylinderlinse befestigt sind.

Technisch realisieren lässt sich diese Art der kardanischen Aufhängung durch einen Metallring, der einerseits mit zwei ersten sich in Bewegungsrichtung des Bearbeitungskopfes erstreckenden Drehachsen mit dem Bearbeitungskopf schwenkbar verbunden ist und der andererseits mit der Zylinderlinse über zwei weitere, zweite Drehachsen mit der Zylinderlinse verbunden ist. Die Zylinderlinse ist in dem vom Metallring umschlossenen Hohlraum angeordnet, wobei die zweiten Drehachsen quer zu der Bewegungsrichtung des Bearbeitungskopfes verlaufen. Die zweiten Drehachsen, die die Zylinderlinse axial drehbar lagern, sind gegenüber den ersten Drehachsen um 90 Grad versetzt.

Bei einer zweckmäßigen Variante der Erfindung ist die Zylinderlinse nur mit einer Stirnseite mit der Pendelaufhängung verbunden. Dies ermöglicht, die Zylinderlinse näher an Kanten oder Ecken von Werkstücken heranführen zu können, so dass das Verschweißen an diesen Stellen vereinfacht wird. Dies lässt sich bei der vorstehend beschriebenen Realisierungsmöglichkeit einfach umsetzen, indem anstelle des metallischen Vollringes ein Ringsegment verwendet wird, dass sich über ein Umfangswinkel von etwa 270 Grad erstreckt und einen typischen Ausschnitt von 90 Grad bestimmt. Der Ausschnitt des Ringsegmentes liegt dabei der mit dem Ringsegment verbundenen Seite der Zylinderlinse diametral gegenüber.

Nachfolgend wird die Erfindung anhand eines in der Zeichnung dargestellten Ausführungsbeispiels näher erläutert. Weitere Merkmale der Erfindung können sich aus der folgenden Beschreibung des Ausführungsbeispiels der Erfindung in Verbindung mit den Ansprüchen und der beigefügten Zeichnung ergeben. Die einzelnen Merkmale der Erfindung können dabei für sich allein oder zu mehreren bei unterschiedlichen Ausführungsformen der Erfindung verwirklicht sein. Es stellen dar:
- Figur 1: einen Haltetubus des Bearbeitungskopfes einer erfindungsgemäßen Laservorrichtung, für eine die Werkstücke pressende und den Laserstrahl fokussierende Zylinderlinse in einer Seitenansicht;
- Figur 2: den Haltetubus aus Figur 1 in einer Stirnansicht, mit Blick auf Zylinderlinse;
- Figur 3: den Haltetubus aus Figur 1 in einer ersten Achsschnittdarstellung, senkrecht zur Mittelachse der Zylinderlinse; und

- Figur 4: den Haltetubus aus Figur 1 in einer zweiten Achsschnittdarstellung quer zur Längsachse der Zylinderlinse.

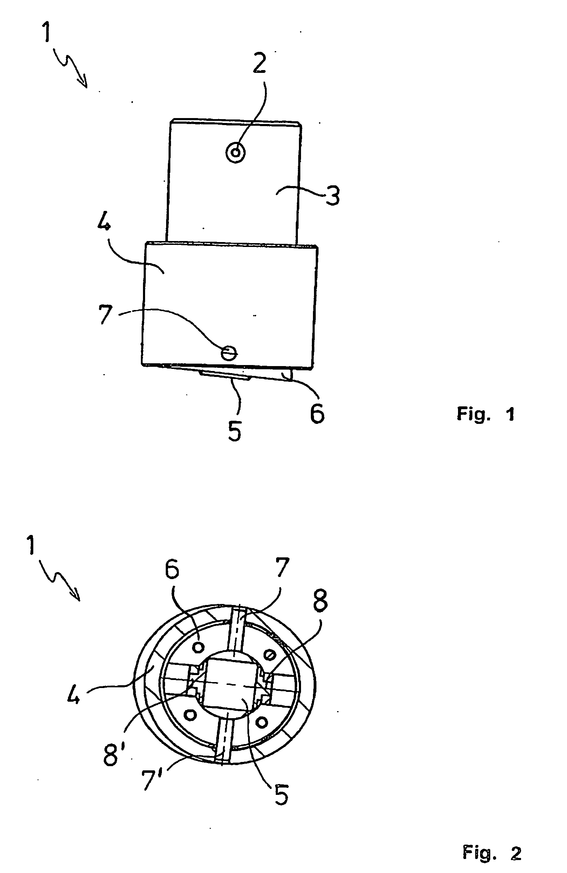

Figur 1 zeigt einen Haltetubus 1 eines in der Zeichnung nicht dargestellten Bearbeitungskopfes einer erfindungsgemäßen Laservorrichtung. Der Haltetubus 1 ist als abgestufter Hohlzylinder ausgebildet und mit einer Befestigungseinrichtung 2 an den Bearbeitungskopf lösbar befestigbar, nachdem dieser mit einem oberen Verbindungsabschnitt 3 in einen Hohlraum des Bearbeitungskopfes eingeführt ist. In dem Bearbeitungskopf sind außerdem Fokussierungseinrichtungen vorgesehen, die einen von einer Laserquelle ausgehenden eingekoppelten Laserstrahl formen und lenken.

An einem unteren Befestigungsabschnitt 4 des Haltetubus 1, der direkt mit einem vergrößerten Durchmesser an den Verbindungsabschnitt 3 anschließt, ist eine Zylinderlinse 5 über einen Aufnahmering 6 beweglich mit dem Haltetubus 1 verbunden. Der Haltetubus 1 und der Aufnahmering 6 sind aus Metall gefertigt. Die Zylinderlinse 5 ist für den in der Zeichnung nicht dargestellten Laserstrahl durchlässig und besteht aus Glas oder einem transparenten Kunststoffmaterial.

Die Figur 1 sowie die Figur 2 zeigen die Zylinderlinse 5 in einer Schwenklage gegenüber dem Haltetubus 1. In einer in der Zeichnung nicht ausgeführten Normallage sind der Aufnahmering 6 und die Zylinderlinse 5 senkrecht zur Achse des Tubus 1 ausgerichtet.

Figur 2 zeigt den Haltetubus 1 gemäß Figur 1 in einer Stirnansicht mit Blick auf die Zylinderlinse 5. Die Zylinderlinse 5 ist mit einem zweidimensionalen Freiheitsgrad in den Haltetubus 1 nach Art einer kardanischen Aufhängung befestigt. Der Aufnahmering 6 ist mit zwei ersten Drehachsen 7, 7', von denen die Drehachse 7 auch in der Figur 1 sichtbar ist, schwenkbar mit dem Haltetubus 1 verbunden. Um 90 Grad versetzt zu den ersten Drehachsen 7, 7' sind zwei zweite Drehachsen 8, 8' vorgesehen, die die Zylinderlinse 5 drehbar mit dem Aufnahmering 6 verbinden.

Die Drehachsen 8, 8' fluchten mit der axialen Mittelachse 9 der Zylinderlinse 5. Damit kann sich diese in Bewegungsrichtung des Bearbeitungskopfes drehen, wenn sie an die in der Zeichnung nicht dargestellten Werkstücke angepresst ist und der Bearbeitungskopf senkrecht zu der Mittelachse 9 der Zylinderlinse 5 voroder rückwärts bewegt wird.

Wenn der Bearbeitungskopf mit dem Tubus 1 an irgendeiner Stelle der Schweißkontur nicht genau senkrecht gegenüber der Oberfläche der Werkstücke ausgerichtet ist, richtet sich der Aufnahmering 6, der die Zylinderlinse 5 trägt, automatisch durch die unsymmetrisch zu dem Zentrum 10 der Zylinderlinse 5 auf die Zylinderlinse 5 einwirkende Anpresskraft parallel und/oder tangential zu der Oberfläche der Werkstücke aus. Dabei schwenkt der Aufnahmering 6 um die Drehachsen 7, 7'.

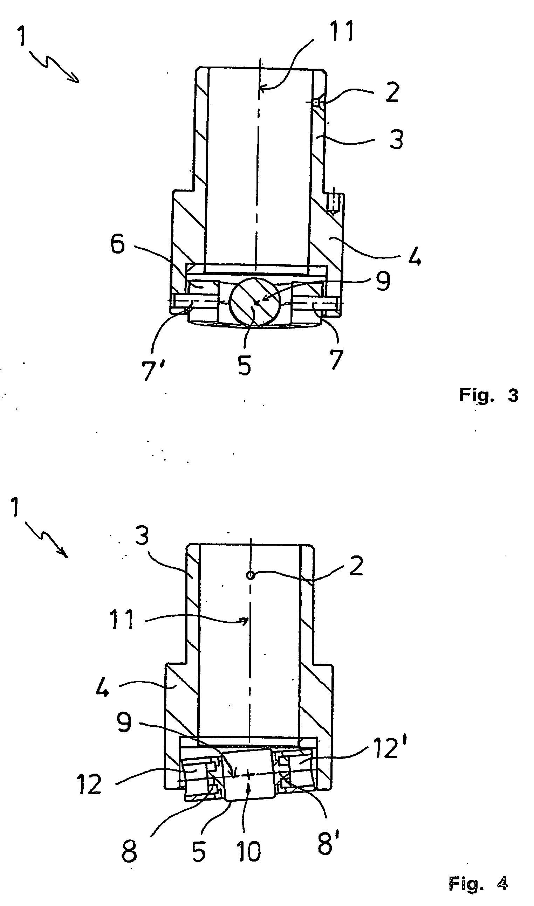

Figur 3 zeigt den Haltetubus 1 in einer ersten Achsschnittdarstellung, bei der die Zylinderlinse 5 in Querrichtung senkrecht zu deren Mittelachse 9 geschnitten ist. Der Aufnahmering 6 ist wie auch bei den anderen Figuren der Zeichnung um einige Winkelgrade gegenüber dem Tubus 1 um die beiden Drehachsen 7, 7' gekippt. Die in Längsrichtung verlaufende Mittelachse 9 der Zylinderlinse 5 ist in Verlängerung der zentralen Längsachse 11 des Haltetubus 1 angeordnet, entlang der sich auch der in der Figur nicht dargestellte Laserstrahl erstreckt. Der Laserstrahl trifft die Zylinderlinse 5 damit immer, sowohl in der Normal-, wie auch in der Schwenklage, im Bereich der durch die Mittelachse 9 bestimmten Mittelebene.

Figur 4 zeigt den Haltetubus 1 in einer gegenüber der Figur 3 um 90 Grad versetzten Achsschnittdarstellung. Die Drehachsen 8, 8' für die Zylinderlinse 5 sind in beidseitigen Gleitlagern 12, 12' aufgenommen, die in dem Aufnahmering 6 eingepresst sind. Das Zentrum 10 der Zylinderlinse 5 ist dabei in direkter Verlängerung der Längsachse 11 des Haltetubus 1 angeordnet, so dass der Laserstrahl unabhängig von der Neigung der Zylinderlinse 5 gegenüber dem Tubus 1 die Zylinderlinse 5 mittig passiert. Damit wird die räumliche Lage der Fokuslinie bezüglich der Werkstücke beim Kippen der Zylinderlinse 5 nur geringfügig beeinflusst.

## Patentansprüche

1. Laservorrichtung zum Verbinden von Werkstücken aus Kunststoff in Durchstrahltechnik, mit einem Bearbeitungskopf, der Fokussierungseinrichtungen für den Laserstrahl aufweist, wobei die den Werkstücken nächstliegende Fokussierungseinrichtung eine als Rolle ausgebildete drehbar gelagerte Zylinderlinse (5) aufweist, die den Laserstrahl längs einer einzigen Achse fokussiert und die die Werkstücke in einem Bereich um die Auftreffstelle des Laserstrahls linienförmig zusammenpresst, durch gekennzeichnet, dass der Bearbeitungskopf eine Pendelaufhängung für die drehbare Zylinderlinse (5) aufweist.

2. Laservorrichtung nach Anspruch 1, **dadurch gekennzeichnet, dass** die Kippachse der Pendelaufhängung durch das Zentrum (10) der Zylinderlinse (5) geht.

3. Laservorrichtung nach Anspruch 1 oder 2, **dadurch gekennzeichnet, dass** die als Anpressrolle wirkende Zylinderlinse (5) über ein Kreuzgelenk mit dem Bearbeitungskopf verbunden ist.

4. Laservorrichtung nach einem der vorangegangenen Ansprüche, **dadurch gekennzeichnet, dass** die Zylinderlinse (5) nur mit einer Stirnseite mit der Pendelaufhängung verbunden ist.

## Claims

1. Laser device for joining work pieces made of plastic by means of beam transmission welding technology, with a processing head that has focusing devices for the laser beam, where the focusing device that is closest to the work pieces has a rotatably supported cylinder lens (5) in the shape of a roller that focuses the laser beam along a single axis and that presses the work pieces together in the form of a line in an area around the impact point of the laser beam, **characterized in that** the processing head has a pendulum-type suspension for the rotatable cylinder lens (5).

2. Laser device as claimed in Claim 1, **characterized in that** the axis of tilt of the pendulum-type suspension passes through the center (10) of the cylinder lens (5).

3. Laser device as claimed in Claim 1 or 2, **characterized in that** the cylinder lens (5) acting as pressure roller is connected to the processing head by means of a universal joint.

4. Laser device as claimed in any one of the preceding claims, **characterized in that** the cylinder lens (5) is connected to the pendulum-type suspension with one face surface only.

## Revendications

1. Dispositif laser destiné à l'assemblage de pièces en matière plastique par transmission de faisceau, comprenant une tête d'usinage qui présente des moyens de focalisation pour le faisceau laser, le moyen de focalisation le plus proche des pièces présentant une lentille cylindrique (5) montée rotative réalisée sous la forme d'un galet, qui focalise le faisceau laser le long d'un axe unique et qui comprime linéairement les pièces dans une zone autour du point d'incidence du faisceau laser, **caractérisé en ce que** la tête d'usinage présente une suspension pendulaire pour la lentille cylindrique rotative (5).

2. Dispositif laser selon la revendication 1, **caractérisé en ce que** l'axe de basculement de la suspension pendulaire passe par le centre (10) de la lentille cylindrique (5).

3. Dispositif laser selon la revendication 1 ou la revendication 2, **caractérisé en ce que** la lentille cylindrique (5) agissant comme galet presseur est reliée à la tête d'usinage par une articulation en croix.

4. Dispositif laser selon l'une des revendications précédentes, **caractérisé en ce que** la lentille cylindrique (5) est reliée à la suspension pendulaire seulement par une face d'extrémité.
